# EUROPÄISCHE PATENTSCHRIFT

(11) **EP 3 914 505 B1**
(45) Veröffentlichungstag und Bekanntmachung des Hinweises auf die Patenterteilung: **10.06.2026**
(21) Anmeldenummer: 19817984.8
(22) Anmeldetag: 02.12.2019
(51) Int. Cl.: B62J 1/00, B60N 2/90, B62J 1/18

(54) **VERSTELLBARE SITZBAUGRUPPE FÜR EIN NEIGEFAHRZEUG SOWIE NEIGEFAHRZEUG MIT EINER DERARTIGEN SITZBAUGRUPPE**
ADJUSTABLE SEAT ASSEMBLY FOR A TILTING VEHICLE AND TILTING VEHICLE WITH SUCH AN ADJUSTABLE SEAT ASSEMBLY
ENSEMBLE SIÈGE RÉGLABLE POUR UN VÉHICULE INCLINABLE ET VÉHICULE INCLINABLE DOTÉ D'UN TEL ENSEMBLE SIÈGE

(30) Priorität: 24.01.2019 DE 102019101714
(43) Veröffentlichungstag der Anmeldung: 01.12.2021
(73) Patentinhaber: Bayerische Motoren Werke Aktiengesellschaft, 80809 München (DE)
(72) Erfinder: SEILER, Joerg, 80939 München (DE); BEUTING, Guido, 80689 Muenchen (DE); WAMSER, Rainer, 82275 Emmering (DE)
(86) Internationale Anmeldenummer: PCT/EP2019/083321
(87) Internationale Veröffentlichungsnummer: WO 2020/151862

(56) Entgegenhaltungen:
- EP-A1- 2 817 204
- EP-A1- 2 817 204
- WO-A1-2014/105316
- WO-A1-2014/105316
- CN-A- 1 746 067
- CN-C- 100 579 856
- CN-C- 100 579 856
- US-A- 5 975 629
- US-A- 5 975 629

## Beschreibung

Die Erfindung betrifft eine verstellbare Sitzbaugruppe für ein Neigefahrzeug, mit einer Sitzwanne, die bezüglich eines Rahmens des Neigefahrzeugs ortsfest festgelegt ist, mit mindestens einer an der Sitzwanne angeordneten Polstereinheit, die auf einer der Sitzwanne abgewandten Seite eine Sitzfläche bildet, und mit mindestens einer Verstelleinrichtung, durch die die Sitzfläche von einer tiefen Sitzposition, in der der Abstand der Sitzfläche zur Sitzwanne minimal ist, in mindestens eine erhöhte Sitzposition überführbar ist, in der der Abstand der Sitzfläche zur Sitzwanne bezüglich der tiefen Sitzposition erhöht ist und/oder durch die eine Neigung der Sitzfläche zur Sitzwanne einstellbar ist wobei die Polstereinheit mindestens ein ortsfest an der Sitzwanne festgelegtes Basispolster, das ein oder eine Mehrzahl von Basispolsterelementen umfasst, und wobei die Polstereinheit mindestens ein durch die Verstelleinrichtung relativ zum Basispolster bewegbares und die Sitzfläche umfassendes Verstellpolster, das ein oder mehrere Verstellpolsterelemente umfasst, aufweist, wobei das Verstellpolster und das Basispolster jeweils eine Außenkontur umfassen, die sich, zumindest in der tiefen Sitzposition, bündig und stufenlos einander fortsetzt, sowie ein Neigefahrzeug mit einer derartigen Sitzbaugruppe.

Neigefahrzeuge mit verstellbarer Sitzbaugruppe sind in unterschiedlichen Ausführungsformen bekannt. Zur Höhenverstellung der Sitzbank ist typischerweise unterhalb der Sitzbank eine Verstellvorrichtung vorgesehen, die mechanisch oder elektrisch betätigt wird und die dazu ausgebildet ist, die Höhe der Sitzbank zu verstellen.

Die Sitzbank grenzt bei Motorrädern üblicherweise an den Tank des Motorrads. Bei einer Höhenverstellung der Sitzbank verändert sich daher eine Fuge, die sich zwischen dem Tank und der Sitzbank befindet. Zusätzlich ändert sich bei der Höhenverstellung auch eine Fuge zwischen der Sitzbank und der Karosserie des Motorrads, beispielsweise zwischen der Sitzbank und einer Seitenverkleidung. Werden diese Fugen zu groß, kann Regenwasser in eine der Fugen eindringen und zu unter der Sitzbank befindlichen Bauteilen des Motorrads gelangen.

Eine gattungsgemäße verstellbare Sitzbaugruppe ist bekannt aus US 5 975 629 A.

Eine nicht gattungsgemäße verstellbare Sitzbaugruppe, bei der das Verstellpolster und das Basispolster keine sich in der tiefen Sitzposition bündig und stufenlos einander fortsetzende Außenkontur bilden, ist bekannt aus CN 100 579 856 C.

Eine nicht gattungsgemäße verstellbare Sitzbaugruppe ist bekannt aus DE 10 2018 131 582.1. Bei dieser bekannten Sitzbaugruppe werden zwei Sitzschalen relativ zueinander bewegt. Hierdurch ist es ermöglicht, die Sitzhöhe der Sitzbaugruppe individuell einzustellen.

Nicht gattungsgemäße verstellbare Sitzbaugruppen sind bekannt aus EP 2 817 204 B1 und WO 2014/105316 A1, bei denen das Sitzpolster ein einstückiges gemeinsames Bauteil umfasst.

Eine nicht gattungsgemäße verstellbare Sitzbaugruppe ist bekannt aus CN 1 746 067 A, bei der eine einstückige Polstereinheit an einer bewegbaren Bodenplatte angeordnet ist und gemeinsam mit dieser von einer tiefen Sitzposition in eine erhöhte Sitzposition überführbar ist.

Eine Aufgabe eines Ausführungsbeispiels der Erfindung ist, eine alternative zweckmäßige Bauform vorzuschlagen.

Diese Aufgabe wird bei einer eingangs genannten verstellbaren Sitzbaugruppe dadurch gelöst, dass das Basispolster mindestens eine entlang der Hochachse des Neigefahrzeugs erstreckte Ausnehmung umfasst, in der das Verstellpolster mit mindestens einem Fügeabschnitt eingreifend angeordnet ist.

Dadurch, dass das Verstellpolster und das Basispolster jeweils eine Außenkontur umfassen, die sich, zumindest in der tiefen Sitzposition, bündig und stufenlos einander fortsetzt, lässt sich die Sitzbaugruppe kompakt ausbilden.

Hierdurch ist insbesondere für einen Nutzer des Neigefahrzeugs ein angenehmes Sitzen auf der Sitzbaugruppe realisiert.

Dadurch, dass die Polstereinheit mindestens ein ortsfest an der Sitzwanne festgelegtes Basispolster und mindestens ein durch die Verstelleinrichtung relativ zum Basispolster bewegbares und die Sitzfläche umfassendes Verstellpolster aufweist, ist eine alternative zweckmäßige Bauform der Sitzbaugruppe realisiert. Basispolster und Verstellpolster können grundsätzlich beliebig zueinander ausgerichtet sein.

Dadurch, dass das Basispolster mindestens eine entlang der Hochachse des Neigefahrzeugs erstreckte Ausnehmung umfasst, in der das Verstellpolster mit mindestens einem Fügeabschnitt eingreifend angeordnet ist, lässt sich die Stabilität der Sitzbaugruppe erhöhen.

Solchenfalls sind Basispolster und Verstellpolster quer zur Hochachse des Neigefahrzeugs in ihrer Relativbewegung zueinander festgelegt oder zumindest begrenzt.

Die Polstereinheit kann ein oder mehrere Basispolster umfassen. Das Basispolster kann aus einem oder einer Mehrzahl von Basispolsterelementen gebildet sein. Darüber hinaus kann die Verstelleinheit ein oder mehrere Verstellpolster umfassen. Das Verstellpolster kann ein oder mehrere Verstellpolsterelemente umfassen. Wenn das Verstellpolster mehr als ein Verstellpolsterelement umfasst, können die einzelnen Verstellpolsterelemente gemeinsam oder unabhängig voneinander in ein und dieselbe oder in unterschiedliche erhöhte Sitzpositionen überführbar sein. Hierdurch die das Einstellen der Sitzbaugruppe verbessert.

Bei einer Weiterbildung erweist es sich als vorteilhaft, wenn die mindestens eine Ausnehmung zumindest abschnittsweise einen sich, insbesondere konisch, verjüngenden Querschnitt umfasst und/oder wenn der Fügeabschnitt einen zur Ausnehmung korrespondierenden, insbesondere in der tiefen Sitzposition komplementären, Querschnitt umfasst.

Dadurch, dass die Ausnehmung einen sich, insbesondere konisch, verjüngenden Querschnitt umfasst, werden das Verstellpolster und das Basispolster beim Überführen von der erhöhten Sitzposition zurück in die Tiefsitzposition automatisch zueinander ausgerichtet.

Um die Bewegung des Verstellpolsters zum Basispolster zu begrenzen, erweist es sich als vorteilhaft, wenn das Verstellpolster mindestens einen Anschlagabschnitt umfasst, der die Ausnehmung quer zur Hochachse des Neigefahrzeugs überragt und an dem zumindest in der tiefen Sitzposition Basispolster und Verstellpolster auf einer der Sitzwanne abgewandten Seite des Basispolsters, insbesondere deckelartig, aneinander anliegen.

Darüber hinaus lässt sich durch eine derartige Anordnung die Polstereinheit platzsparend und kompakt ausbilden. Dieses wird dadurch erreicht, dass das Verstellpolster in der tiefen Sitzposition zumindest im Wesentlichen innerhalb des Basispolsters angeordnet ist.

Ferner ist bei einer Ausführungsform der Sitzbaugruppe vorgesehen, dass die Sitzbaugruppe mindestens ein Abdeckmittel umfasst, das das Basispolster und das Verstellpolster in der tiefen Sitzposition und in der erhöhten Sitzposition nach außen zumindest nahezu vollständig umgibt.

Hierdurch ist das Ausgestalten der Polstereinheit aus zwei oder mehr Komponenten von außen nicht ersichtlich.

In Weiterbildung letztgenannter Ausführungsform erweist es sich als vorteilhaft, wenn das Abdeckmittel unmittelbar an der Sitzwanne festgelegt ist und eine Vorratsoberfläche umfasst, durch die ein Oberflächenunterschied von der tiefen Sitzposition zur erhöhten Sitzposition ausgleichbar ist oder wenn das Abdeckmittel elastisch verformbar ist, und/oder wenn das Abdeckmittel durch ein Spannmittel mittelbar an der Sitzwanne festlegbar oder festgelegt ist.

Unter einer Vorratsoberfläche wird verstanden, dass das Abdeckmittel zumindest in der tiefen Sitzposition einen Materialüberstand besitzt, der nicht straff an der Polstereinheit anliegend ausgebildet ist. Solchenfalls kann das Abdeckmittel auch ein unelastisches Material umfassen. Wenn das Abdeckmittel elastisch verformbar ist, kann das Abdeckmittel auch in der tiefen Sitzposition zumindest im Wesentlichen straff gespannt über die Polstereinheit ausgebildet sein.

Wenn zwischen Abdeckmittel und Sitzwanne ein Spannmittel vorgesehen ist, kann das Abdeckmittel elastisch oder unelastisch ausgebildet sein. Das Spannmittel kann ein elastisch verformbares Element umfassen und/oder ein Aufrollelement, durch das das Abdeckmittel auf eine Rolle oder Spule auf- und abrollbar ist.

Es erweist sich als vorteilhaft, wenn das Abdeckmittel das Verstellpolster in die tiefe Sitzposition vorspannt und/oder wenn das Abdeckmittel eine Folie oder ein elastisches Textil umfasst.

Hierdurch ist auf einfache Weise ein Rückführmittel ausgebildet, das unterstützend oder alternativ zur Verstelleinrichtung ein Zurückführen des Verstellpolsters in die tiefe Sitzposition ermöglicht, wenn die Verstelleinrichtung in die tiefe Sitzposition bewegt ist.

Die Verstelleinrichtung kann grundsätzlich beliebig ausgebildet sein, sofern sie der technischen Funktion nachkommt, das Verstellpolster bezüglich des Basispolsters derart anzusteuern, dass die Sitzfläche von der tiefen Sitzposition in die erhöhte Sitzposition und umgekehrt überführbar ist.

Die Verstelleinrichtung kann beispielsweise einen Kniehebel umfassen, der zwischen der Sitzwanne und dem Verstellpolster kraftübertragend angeordnet ist oder als Nocken, der auf einer Welle angeordnet ist, um bei Rotation der Welle das Verstellpolster bezüglich der Sitzwanne zu verschieben. Bei einer Ausführungsform der Sitzbaugruppe erweist es sich als vorteilhaft, wenn die Verstelleinrichtung mindestens ein zwischen dem Verstellpolster und der Sitzwanne oder dem Basispolster angeordnetes pneumatisch und/oder hydraulisch einstellbares Fluidkissen umfasst.

Das Fluidkissen kann beispielsweise mit einer Pumpe fluidleitend verbunden sein, wobei durch die Pumpe Fluid in das Fluidkissen pumpbar oder ablassbar ist.

Ferner erweist es sich als vorteilhaft, wenn die Verstelleinrichtung derart ausgebildet ist, dass sich neben dem Überführen von der tiefen Sitzposition in die erhöhte Sitzposition auch ein Einstellen der Neigung der Sitzfläche bezüglich des Basispolsters realisieren lässt.

Bei einer weiteren Ausführungsform der Sitzbaugruppe umfasst die Verstelleinrichtung mehrere Verstellelemente, die mit einem aus mehreren Verstellpolsterelementen ausgebildeten Verstellpolster gemeinsam oder unabhängig voneinander ansteuerbar und auslenkbar sind, um die einzelnen Verstellpolsterelemente in die gleiche oder in unterschiedliche erhöhte Sitzpositionen zu überführen. Hierdurch ist die Einstellbarkeit der Sitzbaugruppe weiter erhöht.

Darüber hinaus sind Ausführungsformen der Sitzbaugruppe vorgesehen, bei denen die Verstelleinrichtung mechanisch und/oder elektrisch betätigbar ist. Beispielsweise kann bei einer Ausführungsform der Sitzbaugruppe die Pumpe zum Aufbauen eines hydraulischen und/oder pneumatischen Drucks im Fluidkissen manuell betätigbar sein. Hierzu kann die Verstelleinrichtung ein Blasebalg umfassen, der manuell greifbar ist.

Schließlich wird die Aufgabe gelöst durch ein Neigefahrzeug mit mindestens einer Sitzbaugruppe mit mindestens einem der zuvor genannten Merkmale.

Unter einem Neigefahrzeug werden Fahrräder, Motorräder oder motorradähnliche Kraftfahrzeuge, wie Motorroller, insbesondere zwei-, drei- oder vierrädrige Motorroller, Scooter, neigbare Trikes, Quads oder Dergleichen verstanden.

Weitere Merkmale, Einzelheiten und Vorteile der Erfindung ergeben sich aus den beigefügten Patentansprüchen, aus der zeichnerischen Darstellung und nachfolgenden Beschreibung einer bevorzugten Ausführungsform der Sitzbaugruppe.

In der Zeichnung zeigt:
- Figur 1: Eine schematische Schnittansicht durch ein Ausführungsbeispiel der Sitzbaugruppe in Gegenüberstellung einer tiefen Sitzposition und einer erhöhten Sitzposition;
- Figur 2: Eine Draufsicht auf das Ausführungsbeispiel der Sitzbaugruppe gemäß Figur 1.

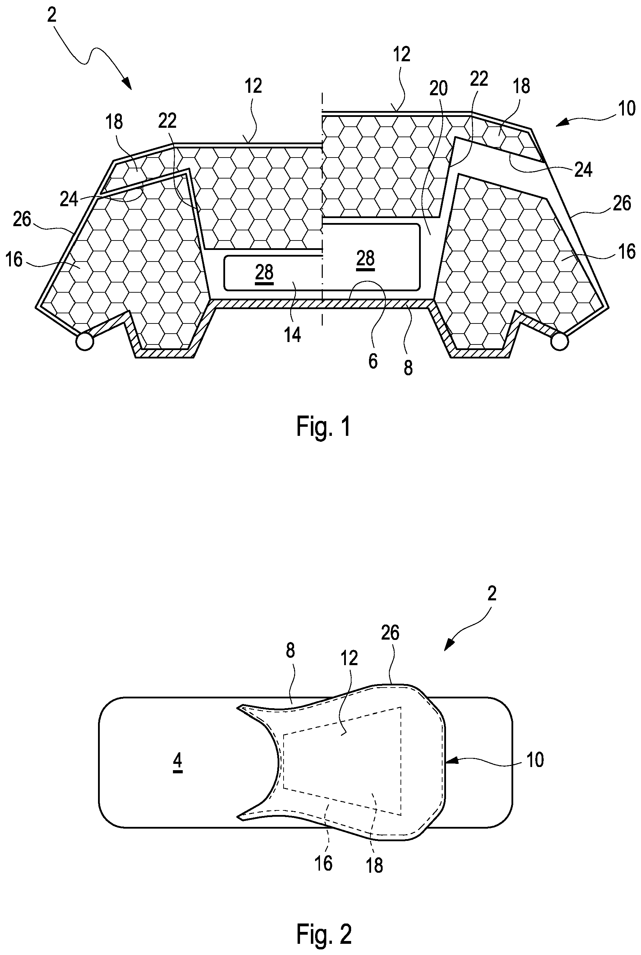

Figur 1 zeigt eine insgesamt mit dem Bezugszeichen 2 versehene verstellbare Sitzbaugruppe für ein Neigefahrzeug 4 (in Figur 2 schematisch dargestellt). Die Sitzbaugruppe 2 umfasst eine Sitzwanne 6, die bezüglich eines Rahmens 8 des Neigefahrzeugs 4 ortsfest festgelegt ist. Die Sitzbaugruppe 2 umfasst ferner eine Polstereinheit 10, die auf einer der Sitzwanne 6 abgewandten Seite eine Sitzfläche 12 bildet. Zum Verstellen der Sitzfläche 12 umfasst die Sitzbaugruppe 2 eine Verstelleinrichtung 14, durch die die Sitzfläche 12 von einer tiefen Sitzposition (linke Seite in Figur 1), in der der Abstand der Sitzfläche 12 zur Sitzwanne 6 minimal ist, in mindestens eine erhöhte Sitzposition (rechte Seite in Figur 1) überführbar ist, in der der Abstand der Sitzfläche 12 zur Sitzwanne 6 bezüglich der tiefen Sitzposition erhöht ist und/oder durch die eine Neigung der Sitzfläche 12 zur Sitzwanne 6 einstellbar ist.

Bei dem in den Figuren gezeigten Ausführungsbeispiel umfasst die Polstereinheit 10 mindestens ein ortsfest an der Sitzwanne 6 festgelegtes Basispolster 16 und mindestens ein durch die Verstelleinrichtung 14 relativ zum Basispolster 16 bewegbares und die Sitzfläche 12 umfassendes Verstellpolster 18 aufweist.

Bei dem in den Figuren gezeigten Ausführungsbeispiel umfasst die Polstereinheit 10 eine entlang der Hochachse des Neigefahrzeugs 4 erstreckte Ausnehmung 20. Diese ist bei dem in den Figuren gezeigten Ausführungsbeispiel im Basispolster 16 angeordnete. Das Verstellpolster 18 umfasst einen korrespondierend zur Ausnehmung 20 ausgebildeten Fügeabschnitt 22. Ausnehmung 20 und Fügeabschnitt 22 umfassen einen konischen, sich verjüngenden Querschnitt. Hierdurch sind durch Ausnehmung 20 und Fügeabschnitt 22 eine Selbstzentrierung der Sitzbaugruppe 2 geschaffen. Darüber hinaus umfasst das Verstellpolster 18 einen Anschlagabschnitt 24, der die Ausnehmung 20 quer zur Hochachse des Neigefahrzeugs 4 überragt und an dem zumindest in der tiefen Sitzposition Basispolster 16 und Verstellpolster 18 auf einer der Sitzwanne 6 abgewandten Seite des Basispolsters 16 deckelartig aneinander anliegen.

Basispolster 16 und Verstellpolster 18 umfassen eine Außenkontur, die sich zumindest in der tiefen Sitzposition, bündig und stufenlos aneinander fortsetzt.

Darüber hinaus umfasst die Sitzbaugruppe 2 ein Abdeckmittel 26, das das Basispolster 16 und das Verstellpolster 18 zumindest nahezu vollständig umgibt und an der Sitzwanne 6 festgelegt ist. Bei dem in den Figuren gezeigten Ausführungsbeispiel ist das Abdeckmittel 26 elastisch verformbar ausgebildet. Hierdurch spannt das Abdeckmittel 26 das Verstellpolster 18 in Richtung auf das Basispolster 16 und bildet ein Rückführmittel.

Zum Überführen des Verstellpolsters 18 relativ zum Basispolster 16, umfasst die Verstelleinrichtung 14 bei dem in den Figuren gezeigten Ausführungsbeispiel ein pneumatisch und/oder hydraulisch einstellbares Fluidkissen 28.

Mit Blick in Figur 1, linke Seite, ist ersichtlich, dass das Volumen des Fluidkissens 28 minimal ist. Solchenfalls ist das Verstellpolster 18 mit der am Verstellpolster 18 angeordneten Sitzfläche 12 in einer tiefen Sitzposition angeordnet.

In Figur 1, rechte Seite, ist das Fluidkissen 28 mit einem erweiterten Volumen ausgebildet. Hier ist das Verstellpolster 18 relativ zum Basispolster 16 bewegt und ein Abstand zwischen Sitzfläche 12 und Sitzwanne 6 erweitert.

Die in der vorstehenden Beschreibung, in den Ansprüchen sowie in der Zeichnung offenbarten Merkmale der Erfindung, können sowohl einzeln, als auch in jeder beliebigen Kombination in der Verwirklichung der Erfindung, definiert und limitiert durch die beigefügten Ansprüche; in ihren verschiedenen Ausführungsformen wesentlich sein.

### Bezugszeichenliste

- 2: Sitzbaugruppe
- 4: Neigefahrzeug
- 6: Sitzwanne
- 8: Rahmen
- 10: Polstereinheit
- 12: Sitzfläche
- 14: Verstelleinrichtung
- 16: Basispolster
- 18: Verstellpolster
- 20: Ausnehmung
- 22: Fügeabschnitt
- 24: Anschlagabschnitt
- 26: Abdeckmittel
- 28: Fluidkissen

## Patentansprüche

1. Verstellbare Sitzbaugruppe (2) für ein Neigefahrzeug (4), mit einer Sitzwanne (6), die bezüglich eines Rahmens (8) des Neigefahrzeugs (4) ortsfest festgelegt ist, mit mindestens einer an der Sitzwanne (6) angeordneten Polstereinheit (10), die auf einer der Sitzwanne (6) abgewandten Seite eine Sitzfläche (12) bildet, und mit mindestens einer Verstelleinrichtung (14), durch die die Sitzfläche(12) von einer tiefen Sitzposition, in der der Abstand der Sitzfläche (12) zur Sitzwanne (6) minimal ist, in mindestens eine erhöhte Sitzposition überführbar ist, in der der Abstand der Sitzfläche (12) zur Sitzwanne (6) bezüglich der tiefen Sitzposition erhöht ist und/oder durch die eine Neigung der Sitzfläche (12) zur Sitzwanne (6) einstellbar ist, wobei die Polstereinheit (10) mindestens ein ortsfest an der Sitzwanne (6) festgelegtes Basispolster (16), das ein oder eine Mehrzahl von Basispolsterelementen umfasst, und wobei die Polstereinheit (10) mindestens ein durch die Verstelleinrichtung (14) relativ zum Basispolster (16) bewegbares und die Sitzfläche (12) umfassendes Verstellpolster (18), das ein oder mehrere Verstellpolsterelemente umfasst, aufweist, wobei das Verstellpolster (18) und das Basispolster (16) jeweils eine Außenkontur umfassen, die sich, zumindest in der tiefen Sitzposition, bündig und stufenlos einander fortsetzt **dadurch gekennzeichnet, dass** das Basispolster (16) mindestens eine entlang der Hochachse des Neigefahrzeugs (4) erstreckte Ausnehmung (20) umfasst, in der das Verstellpolster (18) mit mindestens einem Fügeabschnitt (22) eingreifend angeordnet ist.

2. Sitzbaugruppe (2) nach Anspruch 1, **dadurch gekennzeichnet, dass** die mindestens eine Ausnehmung (20) zumindest abschnittsweise einen sich, insbesondere konisch, verjüngenden Querschnitt umfasst und/oder dass der Fügeabschnitt (22) einen zur Ausnehmung (20) korrespondierenden, insbesondere in der tiefen Sitzposition komplementären, Querschnitt umfasst.

3. Sitzbaugruppe (2) nach einem der vorhergehenden Ansprüche 1 oder 2, **dadurch gekennzeichnet, dass** das Verstellpolster (18) mindestens einen Anschlagabschnitt (24) umfasst, der die Ausnehmung (20) quer zur Hochachse des Neigefahrzeugs (4) überragt und an dem zumindest in der tiefen Sitzposition Basispolster (16) und Verstellpolster (18) auf einer der Sitzwanne (6) abgewandten Seite des Basispolsters (16), insbesondere deckelartig, aneinander anliegen.

4. Sitzbaugruppe (2) nach einem der vorhergehenden Ansprüche, **gekennzeichnet durch** mindestens ein Abdeckmittel (26), das das Basispolster (16) und das Verstellpolster (18) in der tiefen Sitzposition und in der erhöhten Sitzposition nach außen zumindest nahezu vollständig umgibt.

5. Sitzbaugruppe (2) nach Anspruch 4, **dadurch gekennzeichnet, dass** das Abdeckmittel (26) unmittelbar an der Sitzwanne (6) festgelegt ist und eine Vorratsoberfläche umfasst, durch die ein Oberflächenunterschied von der tiefen Sitzposition zur erhöhten Sitzposition ausgleichbar ist oder dass das Abdeckmittel (26) elastisch verformbar ist, und/oder dass das Abdeckmittel (26) durch ein elastisches Spannmittel mittelbar an der Sitzwanne (6) festlegbar oder festgelegt ist.

6. Sitzbaugruppe (2) nach Anspruch 4 oder 5, **dadurch gekennzeichnet, dass** das Abdeckmittel (26) das Verstellpolster (18) in die tiefe Sitzposition vorspannt und/oder dass das Abdeckmittel (26) eine Folie oder ein elastisches Textil umfasst.

7. Sitzbaugruppe (2) nach einem der vorhergehenden Ansprüche, **dadurch gekennzeichnet, dass** die Verstelleinrichtung (14) mindestens ein zwischen dem Verstellpolster (18) und der Sitzwanne (6) oder dem Basispolster (16) angeordnetes pneumatisch und/oder hydraulisch einstellbares Fluidkissen (28) umfasst.

8. Neigefahrzeug (4) mit mindestens einer Sitzbaugruppe (2) nach einem der Ansprüche 1 bis 7.

## Claims

1. Adjustable seat assembly (2) for a tilting vehicle (4), with a seat pan (6) which is fixed in a stationary manner with respect to a frame (8) of the tilting vehicle (4), with at least one cushion unit (10) arranged on the seat pan (6), which forms a seat surface (12) on a side facing away from the seat pan (6), and with at least one adjustment device (14), by means of which the seat surface (12) is transferable from a low seating position, in which the distance of the seat surface (12) to the seat pan (6) is minimal, into at least one raised seating position, in which the distance of the seat surface (12) to the seat pan (6) is increased with respect to the low seating position and/or by means of which an inclination of the seat surface (12) to the seat pan (6) is adjustable, wherein the cushion unit (10) comprises at least one base cushion (16) fixed in a stationary manner on the seat pan (6), which comprises one or a plurality of base cushion elements, and wherein the cushion unit (10) comprises at least one adjustment cushion (18) movable by the adjustment device (14) relative to the base cushion (16) and comprising the seat surface (12), which comprises one or more adjustment cushion elements, wherein the adjustment cushion (18) and the base cushion (16) each comprise an outer contour which, at least in the low seating position, continues flush and steplessly into one another, **characterized in that** the base cushion (16) comprises at least one recess (20) extending along the vertical axis of the tilting vehicle (4), in which the adjustment cushion (18) is arranged engaging with at least one joining section (22).

2. Seat assembly (2) according to claim 1, **characterized in that** the at least one recess (20) comprises, at least in sections, a tapering, in particular conical, cross-section and/or that the joining section (22) comprises a cross-section corresponding to the recess (20), in particular complementary in the low seating position.

3. Seat assembly (2) according to one of the preceding claims 1 or 2, **characterized in that** the adjustment cushion (18) comprises at least one stop section (24) which projects beyond the recess (20) transversely to the vertical axis of the tilting vehicle (4) and at which, at least in the low seating position, base cushion (16) and adjustment cushion (18) abut against one another on a side of the base cushion (16) facing away from the seat pan (6), in particular in a lid-like manner.

4. Seat assembly (2) according to one of the preceding claims, **characterized by** at least one covering means (26) which at least almost completely surrounds the base cushion (16) and the adjustment cushion (18) outwardly in the low seating position and in the raised seating position.

5. Seat assembly (2) according to claim 4, **characterized in that** the covering means (26) is fixed directly on the seat pan (6) and comprises a reserve surface by means of which a surface difference from the low seating position to the raised seating position is compensable, or that the covering means (26) is elastically deformable, and/or that the covering means (26) is fixable or fixed indirectly on the seat pan (6) by an elastic tensioning means.

6. Seat assembly (2) according to claim 4 or 5, **characterized in that** the covering means (26) prestresses the adjustment cushion (18) into the low seating position and/or that the covering means (26) comprises a foil or an elastic textile.

7. Seat assembly (2) according to one of the preceding claims, **characterized in that** the adjustment device (14) comprises at least one pneumatically and/or hydraulically adjustable fluid cushion (28) arranged between the adjustment cushion (18) and the seat pan (6) or the base cushion (16).

8. Tilting vehicle (4) with at least one seat assembly (2) according to one of claims 1 to 7.

## Revendications

1. Ensemble de siège réglable (2) pour un véhicule inclinable (4), avec une cuvette de siège (6) qui est fixée de manière stationnaire par rapport à un châssis (8) du véhicule inclinable (4), avec au moins une unité de rembourrage (10) disposée sur la cuvette de siège (6), qui forme une surface d'assise (12) sur un côté opposé à la cuvette de siège (6), et avec au moins un dispositif de réglage (14), au moyen duquel la surface d'assise (12) est transférable d'une position d'assise basse, dans laquelle la distance de la surface d'assise (12) à la cuvette de siège (6) est minimale, dans au moins une position d'assise élevée, dans laquelle la distance de la surface d'assise (12) à la cuvette de siège (6) est augmentée par rapport à la position d'assise basse et/ou au moyen duquel une inclinaison de la surface d'assise (12) par rapport à la cuvette de siège (6) est réglable, l'unité de rembourrage (10) comprenant au moins un rembourrage de base (16) fixé de manière stationnaire sur la cuvette de siège (6), qui comprend un ou une pluralité d'éléments de rembourrage de base, et l'unité de rembourrage (10) comprenant au moins un rembourrage de réglage (18) mobile par le dispositif de réglage (14) par rapport au rembourrage de base (16) et comprenant la surface d'assise (12), qui comprend un ou plusieurs éléments de rembourrage de réglage, le rembourrage de réglage (18) et le rembourrage de base (16) comprenant chacun un contour extérieur qui, au moins dans la position d'assise basse, se poursuit de manière affleurante et continue l'un dans l'autre, **caractérisé en ce que** le rembourrage de base (16) comprend au moins un évidement (20) s'étendant le long de l'axe vertical du véhicule inclinable (4), dans lequel le rembourrage de réglage (18) est disposé en s'engageant avec au moins une section de jonction (22).

2. Ensemble de siège (2) selon la revendication 1, **caractérisé en ce que** l'au moins un évidement (20) comprend, au moins par sections, une section transversale se rétrécissant, en particulier conique, et/ou **en ce que** la section de jonction (22) comprend une section transversale correspondant à l'évidement (20), en particulier complémentaire dans la position d'assise basse.

3. Ensemble de siège (2) selon l'une des revendications précédentes 1 ou 2, **caractérisé en ce que** le rembourrage de réglage (18) comprend au moins une section de butée (24) qui dépasse l'évidement (20) transversalement à l'axe vertical du véhicule inclinable (4) et au niveau de laquelle, au moins dans la position d'assise basse, le rembourrage de base (16) et le rembourrage de réglage (18) sont en appui l'un contre l'autre sur un côté du rembourrage de base (16) opposé à la cuvette de siège (6), en particulier de manière semblable à un couvercle.

4. Ensemble de siège (2) selon l'une des revendications précédentes, **caractérisé par** au moins un moyen de recouvrement (26) qui entoure au moins presque complètement vers l'extérieur le rembourrage de base (16) et le rembourrage de réglage (18) dans la position d'assise basse et dans la position d'assise élevée.

5. Ensemble de siège (2) selon la revendication 4, **caractérisé en ce que** le moyen de recouvrement (26) est fixé directement sur la cuvette de siège (6) et comprend une surface de réserve au moyen de laquelle une différence de surface de la position d'assise basse à la position d'assise élevée est compensable, ou **en ce que** le moyen de recouvrement (26) est élastiquement déformable, et/ou **en ce que** le moyen de recouvrement (26) est fixable ou fixé indirectement sur la cuvette de siège (6) par un moyen de tension élastique.

6. Ensemble de siège (2) selon la revendication 4 ou 5, **caractérisé en ce que** le moyen de recouvrement (26) précontraint le rembourrage de réglage (18) dans la position d'assise basse et/ou **en ce que** le moyen de recouvrement (26) comprend une feuille ou un textile élastique.

7. Ensemble de siège (2) selon l'une des revendications précédentes, **caractérisé en ce que** le dispositif de réglage (14) comprend au moins un coussin de fluide (28) réglable pneumatiquement et/ou hydrauliquement disposé entre le rembourrage de réglage (18) et la cuvette de siège (6) ou le rembourrage de base (16).

8. Véhicule inclinable (4) avec au moins un ensemble de siège (2) selon l'une des revendications 1 à 7.
